# EUROPEAN PATENT SPECIFICATION

(11) **EP 3 803 182 B1**
(45) Date of publication and mention of the grant of the patent: **03.04.2024**
(21) Application number: 19743044.0
(22) Date of filing: 06.06.2019
(51) Int. Cl.: F16L 37/092, B29C 45/44, B29C 45/26, F16L 47/08, F16L 47/12

(54) **AN ASSEMBLY OF A SYNTHETIC CYLINDRICAL PIPE AND A PIPE COUPLING FOR CONNECTING TO THE SYNTHETIC PIPE**
ANORDNUNG AUS EINEM ZYLINDRISCHEN KUNSTSTOFFROHR UND EINER ROHRKUPPLUNG ZUR VERBINDUNG MIT DEM KUNSTSTOFFROHR
ASSEMBLAGE D'UN TUYAU CYLINDRIQUE SYNTHÉTIQUE ET D'UN RACCORD DE TUYAU POUR LA CONNEXION AU TUYAU SYNTHÉTIQUE

(30) Priority: 06.06.2018 NL 2021067
(43) Date of publication of application: 14.04.2021
(73) Proprietor: Dyka B.V., 8331 LJ Steenwijk (NL)
(72) Inventor: OOSTERHOF, Gerard, 8331 LJ Steenwijk (NL); ZUURMOND, Johannes, 8331 LJ Steenwijk (NL)
(74) Representative: van Trier, Norbertus Henricus Gerardus
(86) International application number: PCT/NL2019/050344
(87) International publication number: WO 2019/235930

(56) References cited:
- WO-A1-00/60271
- WO-A1-01/70480
- WO-A1-02/059521
- DE-A1- 2 542 045
- DE-A1- 4 344 799
- US-A1- 2001 009 332

## Description

### BACKGROUND OF THE INVENTION

The present invention relates to an assembly of a synthetic cylindrical pipe and pipe coupling for connection to the synthetic pipe. The synthetic pipe for instance is a low pressure water pipe for instance for the drainage of sewage water.

### SUMMARY OF THE INVENTION

A drawback of the known assembly of a synthetic cylindrical pipe and a pipe coupling for connection to the synthetic pipe can be that it cannot be glued together on site to connect them to each other in a watertight fashion. This is for instance the case when the pipe is made of polyethylene (PE) or polypropylene (PP). Also when the pipe is made of a synthetic material that is capable of being glued together very well per se, such as polyvinyl chloride (PVC), it may not be advisable to glue the parts together for practical reasons or environmental technical reasons.

It is an object of the present invention to provide an assembly of a synthetic cylindrical pipe and a pipe coupling for connection to the synthetic pipe that can be connected to each other on site in an environmentally friendly fashion.

It is an object of the present invention to provide an assembly of a synthetic cylindrical pipe and a pipe coupling for connection to the synthetic pipe that can be connected to each other on site without knowledge of materials of the synthetic pipe.

DE 43 44 799 discloses an assembly of a synthetic cylindrical pipe and a pipe coupling according to the preamble of claim 1.

The invention provides an assembly of a synthetic cylindrical pipe and a pipe coupling for connecting to the synthetic pipe according to claim 1.The assembly according to the invention has a pipe coupling with an insertion part, which in the insertion direction, is provided with the circumferential seal in the confining wall and, behind it, the grip ring in the first rebate. When the pipe is inserted into the insertion part, the seal immediately connects to it in a sealing fashion. The pipe subsequently passes through the grip ring which is in its first position. Be retracting the pipe, the grip ring is taken along into its second position to fixedly engage around and onto the inserted pipe. Due to the decreasing inside diameter of the confining wall, the seal remains confined between the pipe and the confining wall. The pipe is then fixated and the parts are connected to each other in a sealing fashion. No glue is required, which is practical and environment-friendly.

The pinching ring ensures a pinching engagement of the grip ring around the pipe. The pinching ring can be placed as a separate part through the tapering confining wall and into the casing.

The pinching ring and the seal are connected to one another or form one unity in order for them to keep each other correctly positioned relative to the casing.

The pinching ring and the seal form a unity placed in the casing as a unity. This unity then forms one insert piece for the casing.

In one embodiment thereof, the unity is manufactured via two-component injection molding, so that the most suitable materials can be used for both the pinching ring and the seal. In one embodiment the grip ring is provided with a base ring and grip fingers projecting therefrom, which fingers are distributed around the base ring and extend from the base ring parallel to the insertion direction. The base ring ensures that the grip fingers are positioned around the inserted pipe.

In one embodiment the grip fingers have a free outer end which is oriented from the base ring towards the insertion opening for shortly engaging onto the circumferential seal on the pipe.

In one embodiment the grip fingers have a free outer end that is provided with a pilot edge oriented obliquely to the insertion direction, so that the inserted pipe moves through the grip fingers in a controlled fashion without colliding with them.

In one embodiment the grip fingers are provided with one or more grip teeth for engagement onto the inserted pipe. This is particularly useful when the synthetic pipe has a smooth outer surface.

In one embodiment the grip fingers are connected to the base ring via a living hinge or a local narrowing in the material, as a result of which the grip fingers are individually flexibly movable relative to the base ring.

In one embodiment the grip ring is manufactured of a synthetic material that is harder than the synthetic material of which the pipe is manufactured, as a result of which the grip fingers are capable of pressing themselves locally into the synthetic pipe for, in addition to a pinching action, effecting a form-closed engagement. In particular when using the grip teeth this can work effectively.

In one embodiment, the pipe is manufactured of a thermoplastic synthetic material, preferably polyethylene (PE), polypropylene (PP) or polyvinyl chloride (PVC), or a thermoplastic bioplastic, preferably polylactic acid (PLA) .

In one embodiment the grip ring is manufactured of a thermoplastic synthetic material, preferably polyoxymethylene (POM), polysulfone (PSU) or polyphenylsulfone (PPSU). These synthetic materials usually are harder than the above-mentioned synthetic materials from which the pipe may have been manufactured.

In one embodiment thereof the synthetic material is mixed with glass parts, which ensure hardness of the material.

In one embodiment the first accommodation wall has a constant inside diameter parallel to the insertion direction.

In one embodiment, at the side of the first accommodation wall, the inner surface of the pinching ring forms a direct continuation of the first rebate.

In one embodiment, the grip ring and the pinching ring have parts that engage onto one another for limiting a rotation of the grip ring relative to the pinching ring. That way a rotation of the pipe relative to the pipe coupling can be counteracted.

In one embodiment thereof the parts that engage onto one another limit the rotation of the grip ring relative to the pinching ring up to a predetermined stroke, as a result of which a defined rotation of the pipe relative to the pipe coupling is possible on site, for instance for accurately configuring or readjusting the entire union in case of several pipes and pipe couplings.

In one particular embodiment the parts that engage onto one another form a snap break ring. They for instance define the magnitude of the aforementioned stroke, wherein the pinching ring can be rotated onwards by overcoming a threshold force provided by the snap break ring.

In one embodiment, the grip ring is provided with a base ring and grip fingers projecting therefrom, which fingers are distributed around the base ring and extend from the base ring parallel to the insertion direction, wherein the pinching ring is provided with one or more cams that project inward from the inner surface and extend between the consecutive grip fingers. The distance between the grip fingers then defines the angle at which readjustment is possible.

In one embodiment, the first accommodation wall merges from the insertion part, via a second diameter step, into a second accommodation wall having a larger inside diameter than the first accommodation wall, wherein the second accommodation wall bounds a second rebate in which the pinching ring is accommodated, wherein the second accommodation wall merges into the confining wall. The second diameter step bounds the second rebate in the direction of the grip ring, as a result of which the position of the pinching ring relative to the grip ring positioned in there is defined.

In one embodiment, the second accommodation wall and the pinching ring have parts that engage onto one another for limiting a rotation of the pinching ring relative to the second accommodation wall. That way a rotation of the pipe relative to the pipe coupling can be counteracted.

In a practical embodiment thereof the pinching ring is provided with a recess in which a cam inserted in the second rebate extends from the second accommodation wall for locking the rotation of the grip ring relative to the second accommodation wall.

In one embodiment, the pinching ring is manufactured of a thermoplastic synthetic material, preferably polyethylene (PE), polypropylene (PP) or polyvinyl chloride (PVC), or a thermoplastic bioplastic, preferably polylactic acid (PLA).

In one embodiment the second accommodation wall has a constant inside diameter parallel to the insertion direction.

In one embodiment, the casing is manufactured of a thermoplastic synthetic material, preferably polyethylene (PE), polypropylene (PP) or polyvinyl chloride (PVC), or a thermoplastic bioplastic, preferably polylactic acid (PLA) .

In one embodiment, along the part of decreasing diameter, the inside diameter of the confining wall decreases by a size amounting to 4-8% of the largest inside diameter.

In one embodiment, the inside diameter of the confining wall decreases along a length parallel to the insertion direction which is at least four times as large as the average wall thickness of the confining wall. This results in a gradually tapering shape of the confining wall.

In one embodiment, the inside diameter of the confining wall fluently decreases towards the insertion opening.

In one embodiment, the confining wall tapers coneshaped, conically or spherically towards the insertion opening.

In one embodiment, the confining wall terminates in a circumferential free edge defining the smallest inside diameter of the confining wall.

In one embodiment thereof, the seal engages onto the free edge and is confined in a section of the confining wall situated immediately behind it. The seal can be secured around the circumferential free edge by pressing it in, by inserting the free edge to the inside and releasing it again. The seal then accommodates the free edge and the section of the confining wall situated immediately behind it.

In one embodiment, the seal is provided with an attachment ring with which the seal engages onto the confining wall, and a seal ring connected thereto for sealing engagement around and onto the pipe.

In one embodiment thereof, the attachment ring is shape-retaining for a reliable clamping action between the attachment ring and the confining wall.

In one embodiment, the attachment ring is manufactured of a thermoplastic synthetic material, preferably polyethylene (PE), polypropylene (PP) or polyvinyl chloride (PVC), or a thermoplastic bioplastic, preferably polylactic acid (PLA).

In one embodiment, the seal ring is flexible, in order for it to be capable of elastically engaging onto the inserted pipe to seal it.

In one embodiment, the seal ring is provided with a first circumferential flexible flap for engaging onto the pipe in a sealing fashion, and a second circumferential flexible flap extending from the first flap towards the confining wall for sealing engagement around and onto the pipe.

In one embodiment, the seal ring is manufactured of a flexible synthetic material, in this example a thermoplastic elastomer (TPE) or technical rubber, preferably an olefin-based cross-linked thermoplastic elastomer (TPV), preferably Ethylene Propylene Diene Monomer (EPDM) mixed with polypropylene (PP).

When using various types of material, the attachment ring and the seal ring can for instance be manufactured by means of 2K-injection molding.

The aspects and measures described in this description and the claims of the application and/or shown in the drawings of this application may where possible also be used individually. Said individual aspects and other aspects may be the subject of divisional patent applications relating thereto. This particularly applies to the measures and aspects that are described per se in the sub claims.

### BRIEF DESCRIPTION OF THE DRAWINGS

The invention will be elucidated on the basis of the exemplary embodiments shown in the attached drawings, in which:
Figures 1A and 1B show an isometric view and an exploded view of a coupling sleeve for pipes according to a first embodiment of the invention;
Figures 2A and 2B show an isometric longitudinal section and a straight view of a detail thereof of the coupling sleeve according to figures 1A and 1B;
Figures 3A and 3B show an isometric longitudinal section and a straight view of a detail thereof of the coupling sleeve according to the previous figures once a pipe has been secured therein;
Figures 4A and 4B show an isometric longitudinal section and an exploded view of a coupling sleeve according to a second embodiment of the invention; and
Figures 5A-5D show longitudinal sections of an injection molding process for manufacturing the casing of the coupling sleeve according to the previous figures.

### DETAILED DESCRIPTION OF THE DRAWINGS

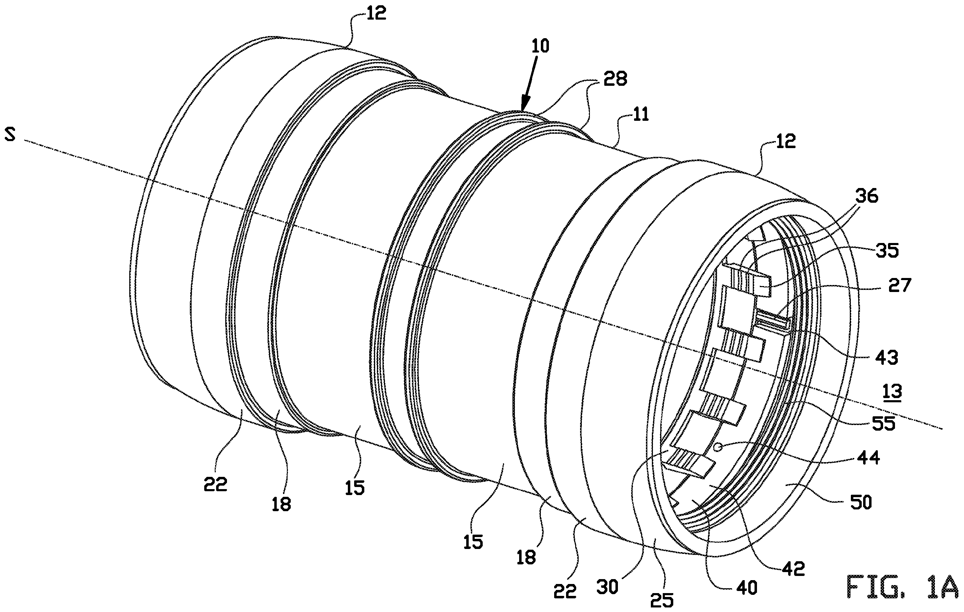

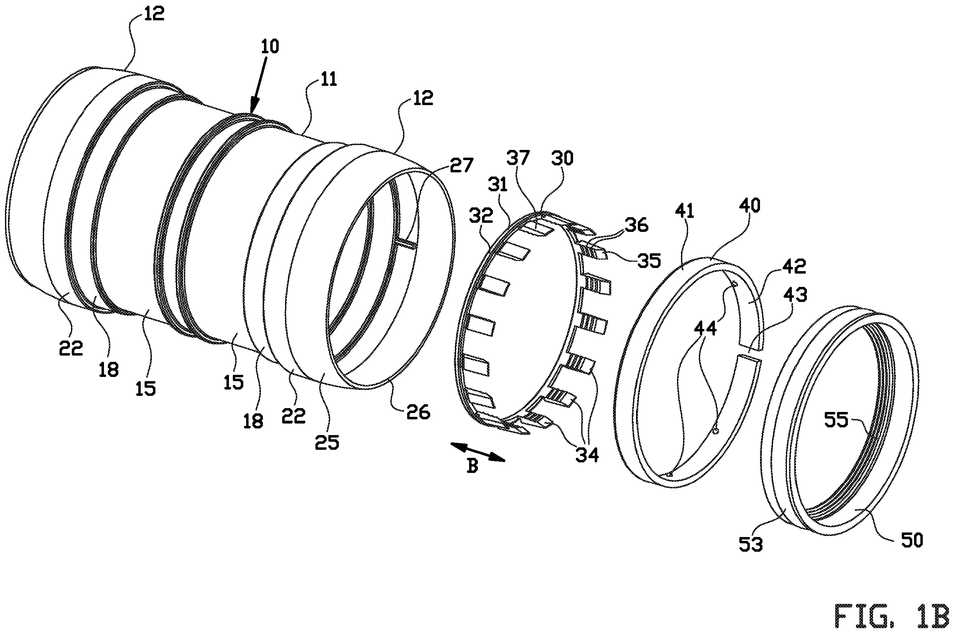

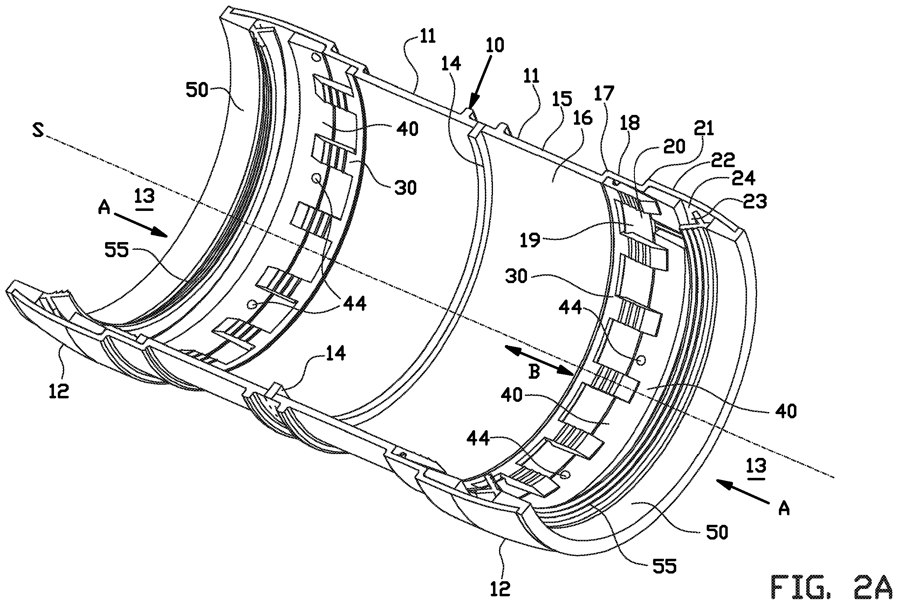

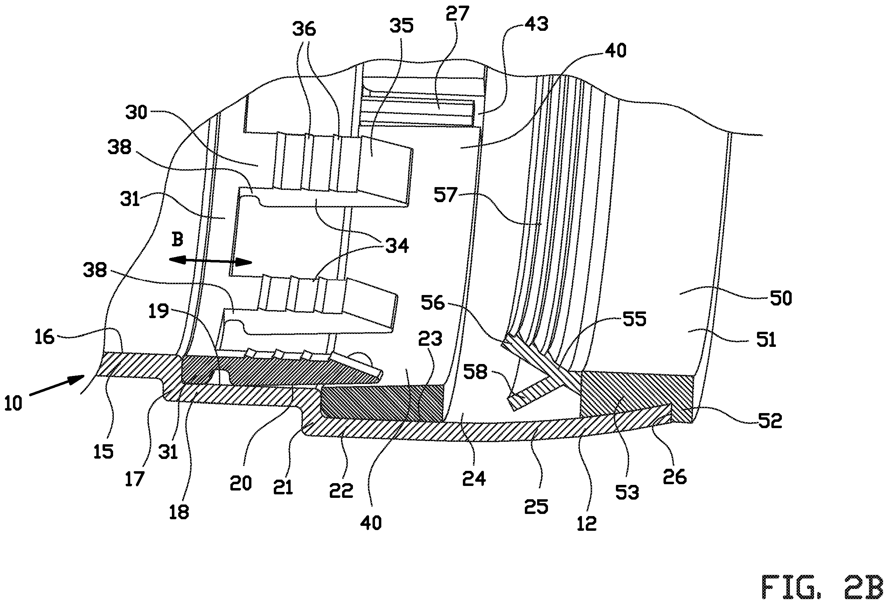

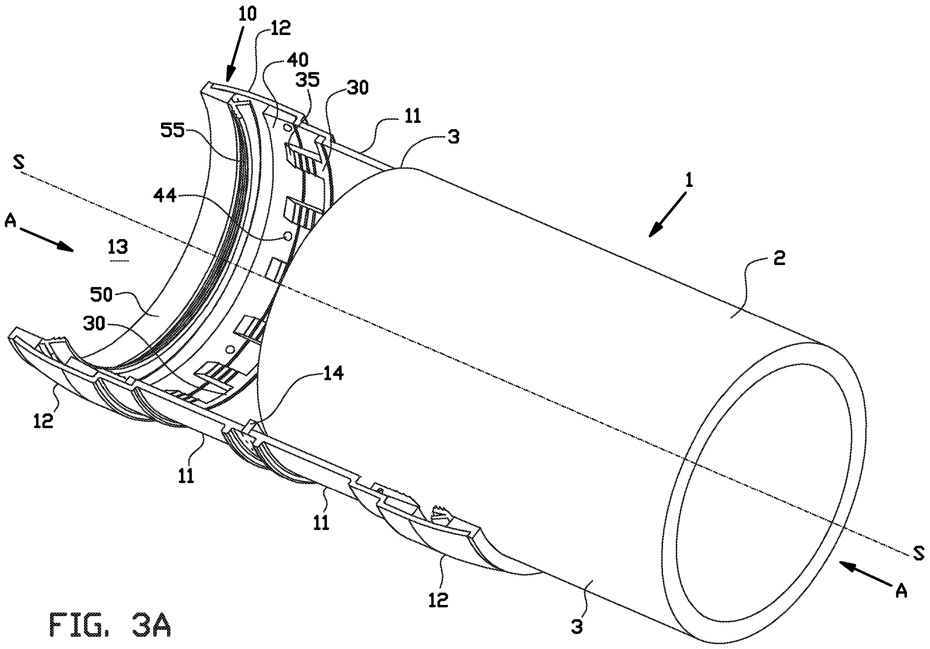

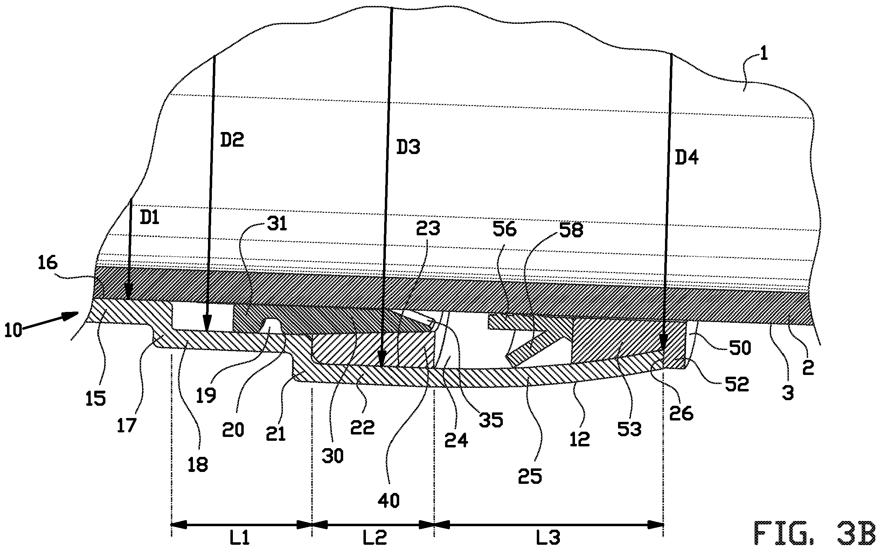

Figures 1A and 1B show an isometric view and an exploded view of a pipe coupling, in this example a straight coupling sleeve 10 for coupling two cylindrical pipes 1 according to a first embodiment of the invention; Figures 2A and 3A show longitudinal sections of the coupling sleeve 10 before and after coupling the pipes 1, and figures 2B and 3B show details thereof.

The synthetic pipes 1 are low-pressure water pipes, for instance for the drainage of sewage water. In this example, the pipes 1 have a circle-cylindrical circumferential wall 2 with a smooth outer surface 3. The outside diameter of the pipes 1 typically is 32 millimeters, 40 millimeters, 50 millimeters, 75 millimeters, 90 millimeters, 110 millimeters, 125 millimeters or 160 millimeters. The pipes 1 are made of a synthetic material. This may be a synthetic material that cannot be glued together on site to connect the parts in a watertight fashion, such as polyethylene (PE) or polypropylene (PP), or a synthetic material that can be glued together very well per se, such as polyvinyl chloride (PVC), but of which it is not advisable to glue them together for practical reasons or environmental technical reasons.

The coupling sleeve 10 is configured for entering into a watertight coupling with the pipes 1 without gluing them together. The coupling sleeve 10 comprises a casing 11 made of synthetic material, in this example an olefin-based thermoplastic synthetic material, preferably polyethylene (PE), polypropylene (PP) or polyvinyl chloride (PVC), or a thermoplastic bioplastic, preferably polylactic acid (PLA). As can be seen best in figure 2A, the casing 11 is built symmetrically, having a center line S for the circumferential parts in this example having a constant radius. The casing 11 comprises two insertion parts 12 having insertion openings 13 for inserting the pipes 1 in direction A parallel to the center line S. The two insertion parts 12 terminate in a circumferential internal central bumper 14. In this example the pipe coupling is the straight coupling sleeve 10, but other configurations are also possible, such as a T-pipe coupling, Y-coupling or bend in which the insertion parts 12 have a different mutual orientation. The coupling sleeve 10 will be described below on the basis of the insertion part 12 and the parts accommodated therein to the right in the figures.

Casing 11 has a constant wall thickness along its entire length. As can be seen best in figures 2A and 3B, the casing 11 comprises a cylindrical insertion wall 15 having a smooth inner surface 16 in which the inserted pipe 1 fits. Its inside diameter D1 corresponds with the outside diameter of the inserted pipe 1 wherein a small positive tolerance has been used so that the pipe 1, once inserted in direction A, can be shifted back and forth. Via a first diameter step 17, the insertion wall 15 merges into a first cylindrical accommodation wall 18 having a larger inside diameter D2 and having a smooth inner surface 19. It forms a first circumferential interior rebate 20 in which a grip ring 30 is accommodated. Via a second diameter step 21, the first accommodation wall 18 merges into a second cylindrical accommodation wall 22 having a larger inside diameter D3 and having a smooth third inner surface 23. It forms a second circumferential interior rebate 24 in which a pinching ring 40 is accommodated. The second accommodation wall 22 merges into a conically tapering confining wall 25 the free edge 26 of which has an inside diameter D4. The casing 11 comprises two circumferential ribs 28 for firmly retaining the casing 11.

The inside diameter D4 of the free edge 26 is larger than the inside diameter D1 of the insertion wall 15 and smaller than the inside diameter D3 of the second accommodation wall 22. A seal 50 is secured within the confining wall 25. The inside diameter of the confining wall 25 decreases from the inside diameter D3 of the second accommodation wall 22 to the inside diameter D4 of the free edge 26 with a size that is smaller than four times the average wall thickness of the confining wall 25. The inside diameter of the confining wall 25 decreases from the inside diameter D3 of the second accommodation wall 22 to the inside diameter D4 of the free edge 26 along a length L3 parallel to the insertion direction A that is at least four times as large as the average wall thickness of the confining wall 25. In the accommodation direction A, this length L3 exceeds the length L1 of the first accommodation wall 18 and the length L2 of the second accommodation wall 22.

As shown in figures 1B and 2B, the grip ring 30 is provided with a base ring 31 that is closed all around and has a cylindrical outer surface 32 which under a small positive tolerance abuts the inner surface 19 of the first accommodation wall 18, so that it is able to shift back and forth relative thereto in direction B parallel to the insertion direction A. The grip ring 30 is provided with elongated grip fingers 34 distributed all around, which fingers, via living hinges or a local narrowing 38 in the material, are flexibly connected to the base ring 31 and which extend therefrom in axial direction. At the free outer end, the grip fingers 34 are provided with an inclined pilot edge 35 so that they guide themselves around the inserted pipe 1, and with several grip teeth 36 which will then engage onto the outer surface 3 of the inserted pipe 1. The grip fingers 34 are provided with a smooth outer surface 37 abutting the pinching ring 40.

The grip ring 30 is made of a synthetic material that is harder than the synthetic material of which the pipes 1 have been made, so that when exerting a radial pressure force the grip teeth 36 cause a local impression in the pipes 1 in which way the grip ring 30 engages onto the pipes 1. In this example, the grip ring 30 is made of a thermoplastic synthetic material, preferably polyoxymethylene (POM), polysulfone (PSU) or polyphenylsulfone (PPSU). In order to increase the hardness, glass may be mixed into it.

As shown in figures 1B and 2B the pinching ring 40 has a cylindrical outer surface 41 abutting the inner surface 23 of the second accommodation wall 22, and a conically tapering inner surface 42 at an angle of 1-8 degrees to the outer surface 41 and center line S. In this example, said angle is 3.5 degrees. The pinching ring 40 has an interruption 43 as a result of which the outside diameter of the pinching ring 40 can be reduced to secure it in the second rebate 24. A cam 27 of the casing 11 projecting upward from the inner surface 23 of the second accommodation wall 22 will then enter the interruption 43, so that the pinching ring 40 is rotation-fixedly accommodated. At the inside, the pinching ring 40 is provided with several cams 44 projecting from the inner surface 42. The cams 44 extend between the grip teeth 36 so that the grip ring 30 is able to rotate relative to the pinching ring 40 by a stroke limited by the intermediate space between the consecutive grip fingers 34. Said stroke is therefore limited by the engagement of the cams 44 onto the grip teeth 36, which limitation can always be overcome by exceeding a threshold force as a result of which the grip teeth 36 pass the abutting cams 44 by. That way the cooperating cams 44 and grip teeth 36 form a snap break ring.

The pinching ring 40 is made of synthetic material, in this example an olefin-based thermoplastic synthetic material, preferably polyethylene (PE), polypropylene (PP) or polyvinyl chloride (PVC), or a thermoplastic bioplastic, preferably polylactic acid (PLA). The inner surface 19 of the first accommodation wall 18 merges straight into the inner surface 42 of the pinching ring 40. The pinching ring 40 and the grip ring 30 together form the locking for the inserted pipe 1.

As shown in figures 1B and 2B the seal 50 is provided with an attachment ring 51 by means of which it is secured to the casing 11. For that purpose, the attachment ring 51 comprises a flange 52 which abuts the free edge 26 of the confining wall 25, and a base ring 53 which behind it under pre-stress abuts the interior side of the confining wall 25 in a clamping fashion. The seal 50 is provided with a flexible seal ring 55, which in this example has a Y-shaped cross-section. The seal ring 55 comprises a first circumferential flap 56 which in the relaxed condition of the seal ring 55 is oriented obliquely to the inside from the base ring 53 and which at the side oriented towards the pipe 1 is provided with several seal ribs 57 which engage onto the inserted pipe 1 in a sealing fashion. The seal ring 55 comprises a second circumferential flap 58 which is oriented obliquely from the first circumferential flap 56 towards the confining wall 25. In the relaxed condition of the seal ring 55 the second flap 58 is free from the confining wall 25. When the pipe 1 has been inserted, the second flap 58 engages onto the confining wall 25 in a sealing fashion.

The attachment ring 51 is made of synthetic material, in this example an olefin-based thermoplastic synthetic material, preferably polyethylene (PE), polypropylene (PP) or polyvinyl chloride (PVC), or a thermoplastic bioplastic, preferably polylactic acid (PLA). The seal ring 55 is manufactured of a flexible synthetic material, in this example a thermoplastic elastomer (TPE) or technical rubber, preferably an olefin-based cross-linked thermoplastic elastomer (TPV), preferably Ethylene Propylene Diene Monomer (EPDM) mixed with polypropylene (PP). The seal 50 can be made by means of two-component (2K) injection molding from these two different synthetic materials.

When connecting the pipe 1 to the coupling sleeve 10 it is inserted via the insertion opening 13 in direction A, wherein the seal 50 engages onto the smooth outer surface 3 of the pipe 1 in a sealing fashion. The pipe 1 is inserted as deeply as possible, preferably until it abuts the bumper 14. The pipe 1 has then been slid through the grip ring 30, wherein the grip fingers 34 slide along the outside and keep the grip ring 30 in its first position against the first diameter step 17. Subsequently the pipe 1 is pulled back in opposite direction, as a result of which the grip fingers 34 slide along with the pipe 1 over the conically tapering inner surface 42 and the grip teeth 36 locally pierce the circumferential wall 2 as they are harder than the pipe 1, until this wedge action no longer allows an onward returning motion. In this second position of the grip ring 30, the pipe 1 is squeezed or pinched tight all around in the coupling sleeve 10. In its second position, the grip ring 30 is free from the seal 50, as a result of which the pipe 1 can always be redrawn to tighten the squeeze or pinch.

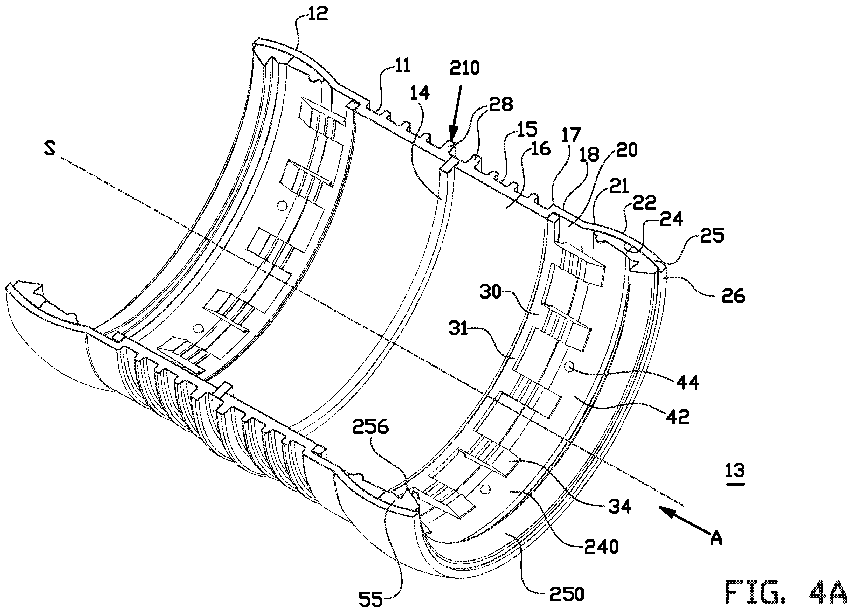

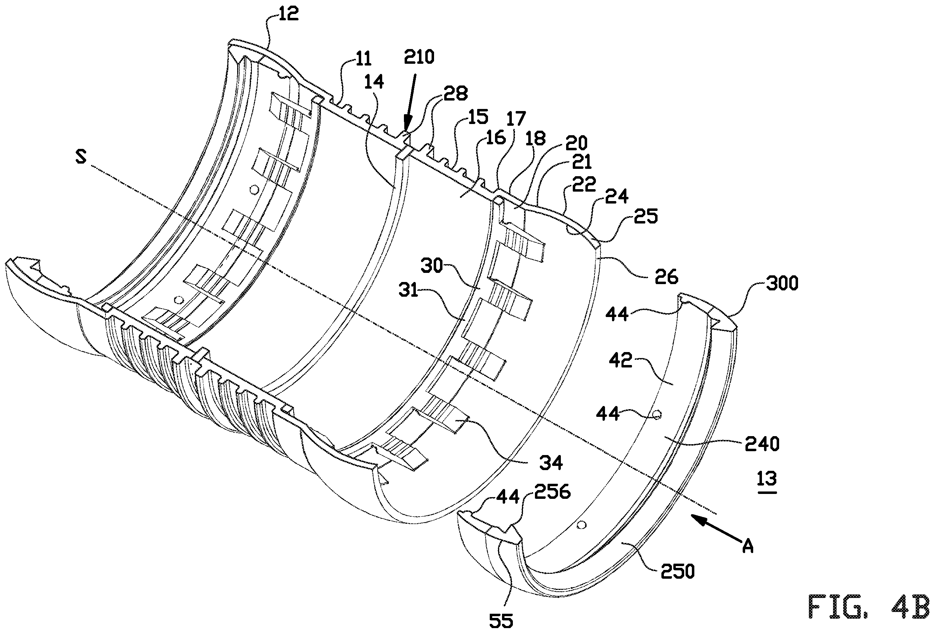

In this example, figures 4A and 4B show a straight coupling sleeve 210 for coupling the two cylindrical pipes 1 according to a second embodiment of the invention, which is a variety of the first embodiment. The parts corresponding with the parts of the first embodiment are provided with the same reference numbers and are not further explained. The deviating parts are provided with a reference number increased by 200 compared to the first embodiment.

Instead of a second straight accommodation wall, the casing 11 of the coupling sleeve 210 has a second accommodation wall 22 that is convex on the outside and that on the inside forms a second internal rebate 24 that is concave. The second accommodation wall 22 is again continued more in the confining wall 25. The coupling sleeve 210 has a pinching ring 240 of which the outer surface again fittingly connects to the second rebate 24. The coupling sleeve 210 has a seal 250 with a seal ring 55 which in this example abuts the interior side of the confining wall 25 in a fitted and sealing fashion, and a circumferential flap 256 connected thereto which in relaxed condition is oriented obliquely to the inside to come into sealing engagement with the inserted pipe 1.

As shown in figure 4B, the pinching ring 240 is connected to the seal 250 thus forming one separate insert piece 300 to be placed in the casing 11. That way the pinching ring 240 is kept in the correct position by the seal ring 250. The insert piece 300 can be made by means of two-component injection molding so that the pinching ring 240 is united with the seal ring 250.

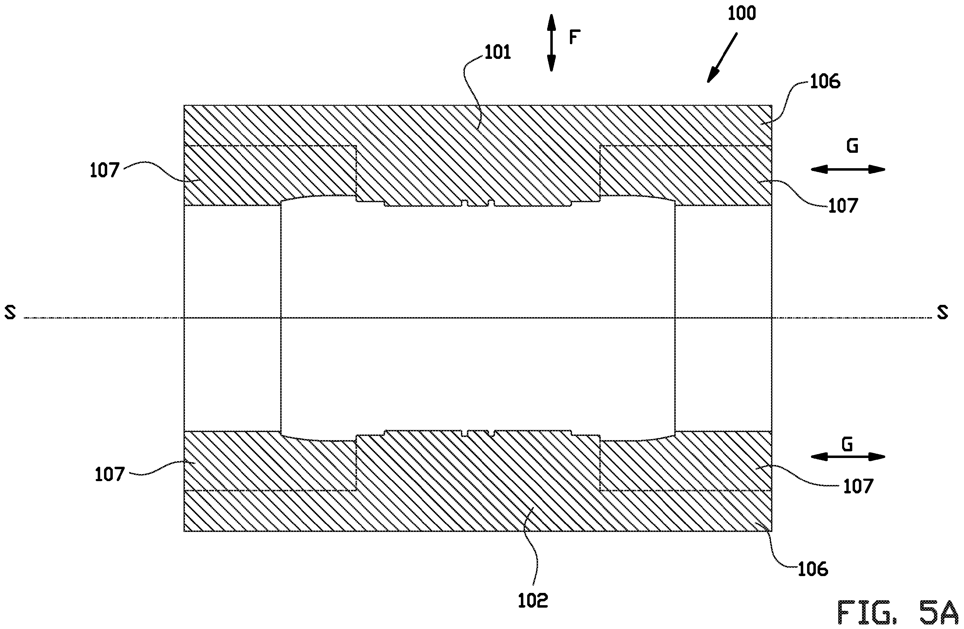

Figures 5A-5D show an injection molding process for in this example manufacturing the casing 11 of the coupling sleeve 10 according to a first embodiment in an injection-molding device 100. As shown in figure 5A, the injection-molding device 100 comprises a multi-part outer mold, in this example having a first outer mold 101 and a complementary second outer mold 102 which together define the entire exterior shape of the casing 11. The outer molds 101, 102 can be opened and closed in direction F transverse to the center line S. Alternatively or additionally, both outer molds 101, 102 are built having a basic body 106 and insert pieces 107 fitting in there which are schematically shown in broken lines. The insert pieces 107 can be inserted and taken out in direction G parallel to the center line S, and are shaped such that they comprise the inwardly tapering distal parts of the casing 11.

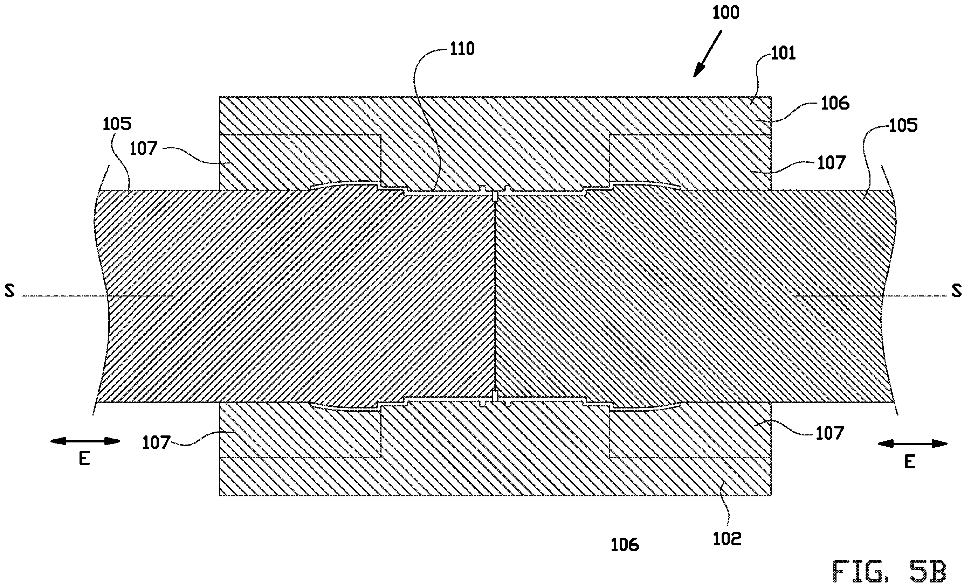

As shown in figure 5B, the injection-molding device 100 is provided with two drawing punches 105 which are situated in the complementary outer molds 101, 102 in order to define the interior shape of the casing 11. That way a cylindrical casting space 110 is defined between the molds 101, 102, 105 which space has the shape of the casing 11. The drawing punches 105 are guided along the center line S in direction E relative to the complementary outer molds 101, 102 so as to be movable in a straight line retaining the orientation relative to the complementary outer molds 101, 102.

The inserted position of the drawing punches 105 in the closed complementary outer molds 101, 102 as shown in figure 5B is the starting position of the injection molding process. By means of an injection-molding machine, the space 110 between the heated molds 101, 102, 105 is filled with the thermoplastic synthetic material with which the casing 11 is made. The synthetic material is heated to above the melting point of approximately 200 degrees Celsius as a result of which it has become liquid. After completely filling the space 110, the synthetic material acquires an initial shape retention by cooling down the mold a little. The initial shape retention is obtained when a part of the synthetic material has transitioned into the rubber phase or solid phase, as a result of which a semi-finished product 111 in the shape of the outer casing 11 is formed. The synthetic material is cooled down to the heat distortion temperature (HDT) or 10-20 degrees Celsius below HDT.

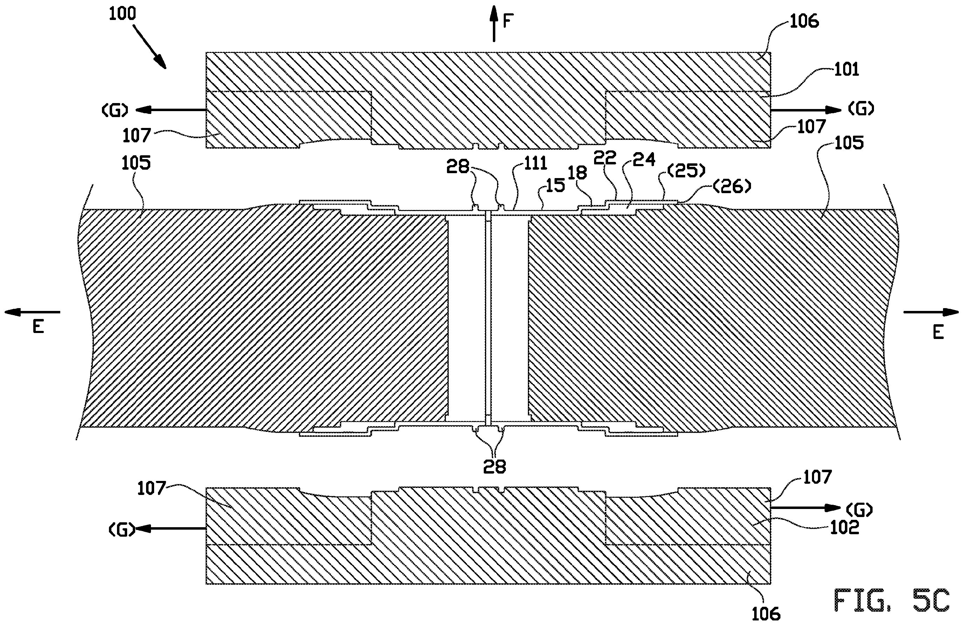

The complementary outer molds 101, 102 are opened in direction F as shown in figure 5C as soon as the initial shape retention has been obtained. Alternatively, only the insert pieces 107 are taken out in direction G, so that the semi-finished product is held at the circumferential ribs 28 by the outer molds 101, 102 themselves. Taking out the insert pieces 107 provides room to the conically tapering confining wall 25 to be formed, to be able to move radially to the outside.

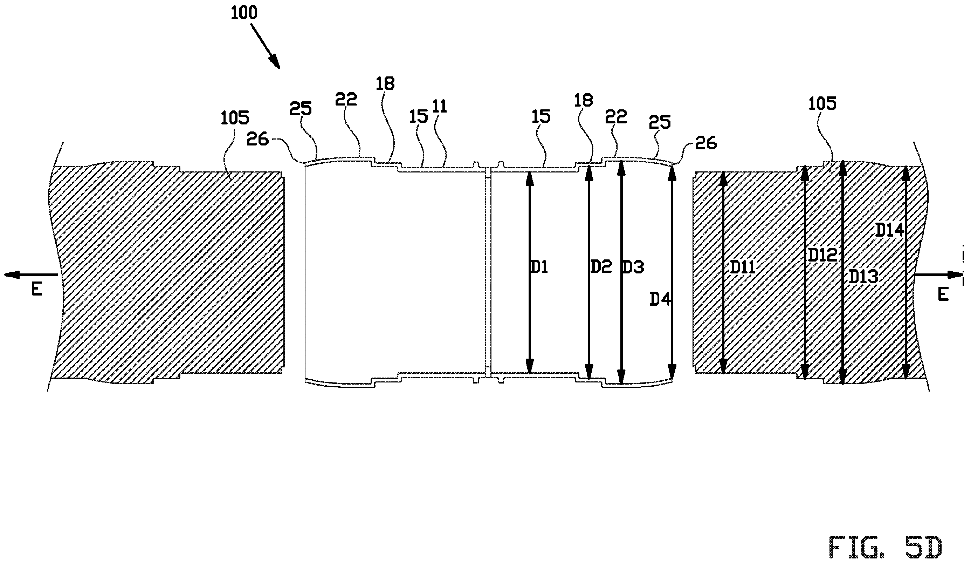

Subsequently the drawing punches 105 are gradually drawn out of the semi-finished product 111 in direction E. The part of the semi-finished product 111 forming the confining wall 25 is then temporarily stretched out along the entire length to the outside diameter of the part of the mold forming the second accommodation wall or the second rebate 24, as shown in figure 5C. The drawing punches 105 are continuously drawn through until they have left the semi-finished product 111 entirely as shown in figure 5D. At heat distortion temperature (HDT) or to 10-20 degrees Celsius below it, the still warm synthetic material is sufficiently elastic to allow the temporarily stretched part to return again into the wanted shape of the confining wall 25 with the inside diameter D4 at the free edge 26. Said plastic returning movement takes place entirely outside the warm molds 101, 102, 105 as a result of which they can immediately be used again for injection molding a next casing 11. Once the synthetic material of the semi-finished product 111 has fully cured, the inside diameters D1-D4 have been obtained. The drawing punches 105 have outside diameters D11-D14 that are adjusted to the respective inside diameters D1-D4 such that starting from these outside diameters after temperature shrinkage and post-crystallization shrinkage of the cooling synthetic material, the required inside diameters D1-D4 are obtained.

In the description above the pipe coupling 10 is shown for connection to cylindrical pipes 1. The expression "cylindrical" must be interpreted broadly, comprising both circle-cylindrical and ellipticcylindrical.

The above description is included to illustrate the operation of preferred embodiments of the invention and not to limit the scope of the invention. Starting from the above explanation many variations that fall within the scope of the present invention will be evident to an expert.

## Claims

1. Assembly of a synthetic cylindrical pipe (1) and a pipe coupling (210) for connecting to the synthetic pipe (1), wherein the pipe coupling (210) comprises an insertion part (12) having an insertion opening (13) for in an insertion direction (A) inserting the synthetic pipe (1) into the pipe coupling (210), wherein the insertion part (12) comprises a synthetic casing (11) that is provided with a circumferential insertion wall (15) into which the pipe (1) fits, wherein via a first diameter step (17) the insertion wall (15) merges into a first circumferential accommodation wall (18) having a larger inside diameter (D2) than the insertion wall (15), wherein the first accommodation wall (18) bounds a first rebate (20), wherein the insertion part (12) comprises a grip ring (30) that is accommodated in the first rebate (20) and that engages around the inserted pipe (1) and that can be moved in the insertion direction (A) in the first rebate (20) between a first position in which the pipe (1) can be inserted through the grip ring (30) towards the insertion wall (15), and a second position closer towards the insertion opening (13) in which the grip ring (30) fixedly engages around and onto the inserted pipe (1), wherein the first accommodation wall (18) merges into a circumferential confining wall (25) having an inside diameter that decreases towards the insertion opening (13), wherein the insertion part (12) comprises a circumferential seal (250) within the confining wall (25), which seal (250) engages around and onto the pipe (1), wherein the insertion part (12) is provided with a pinching ring (240) extending around the grip ring (30), wherein the pinching ring (240) is provided with an inner surface (42) that is oriented towards the grip ring (30) and obliquely oriented to the insertion direction (A), wherein upon moving from the first position to the second position the inner surface (42) urges the grip ring (30) into fixed engagement onto the pipe (1), **characterized in that** the pinching ring (240) and the seal (250) are connected to one another or form one unity, wherein the pinching ring (240) and the seal (250) form one separate insert piece (300) that is placed in the casing (11).

2. Assembly according to claim 1, wherein the insert piece (300) is manufactured via two-component injection molding.

3. Assembly according to any one of the preceding claims, wherein at the side of the first accommodation wall (18), the inner surface (42) of the pinching ring (240) forms a direct continuation of the first rebate (20) .

4. Assembly according to any one of the preceding claims, wherein the grip ring (30) and the pinching ring (240) have parts (34, 44) that engage onto one another for limiting a rotation of the grip ring (30) relative to the pinching ring (240), wherein the parts (34, 44) that engage onto one another preferably limit the rotation of the grip ring (30) relative to the pinching ring (240) up to a predetermined stroke.

5. Assembly according to claim 4, wherein the parts (34, 44) that engage onto one another form a snap break ring.

6. Assembly according to any one of the preceding claims, wherein the pinching ring (240) is manufactured of a thermoplastic synthetic material, preferably polyethylene (PE), polypropylene (PP) or polyvinyl chloride (PVC), or a thermoplastic bioplastic, preferably polylactic acid (PLA).

7. Assembly according to any one of the preceding claims, wherein the grip ring (30) is provided with a base ring (31) and grip fingers (34) projecting therefrom, which fingers (34) are distributed around the base ring (31) and extend from the base ring (31) parallel to the insertion direction (A), wherein the grip fingers (34) preferably have a free outer end which is oriented from the base ring (31) towards the insertion opening (13).

8. Assembly according to claim 7, wherein the grip fingers (34) are provided with one or more grip teeth (36) for engagement onto the inserted pipe (1).

9. Assembly according to claim 7 or 8, wherein the grip fingers (34) are connected to the base ring (31) via a living hinge or local narrowing in the material.

10. Assembly according to any one of the claims 7-9, wherein the grip ring (30) is manufactured of a synthetic material that is harder than the synthetic material of which the pipe (1) is manufactured.

11. Assembly according to any one of the preceding claims, wherein the pipe (1) is manufactured of a thermoplastic synthetic material, preferably polyethylene (PE), polypropylene (PP) or polyvinyl chloride (PVC), or a thermoplastic bioplastic, preferably polylactic acid (PLA) .

12. Assembly according to any one of the preceding claims, wherein the grip ring (30) is manufactured of a thermoplastic synthetic material, preferably polyoxymethylene (POM), polysulfone (PSU) or polyphenylsulfone (PPSU), wherein the synthetic material is preferably mixed with glass parts.

13. Assembly according to any one of the preceding claims, wherein the casing (11) is manufactured of a thermoplastic synthetic material, preferably polyethylene (PE), polypropylene (PP) or polyvinyl chloride (PVC), or a thermoplastic bioplastic, preferably polylactic acid (PLA) .

14. Assembly according to any one of the preceding claims, wherein the inside diameter of the confining wall (25) fluently decreases towards the insertion opening (13) .

15. Assembly according to any one of the preceding claims, wherein the seal (250) is provided with an attachment ring (51) with which the seal engages onto the confining wall, and a seal ring (55) connected thereto for sealing engagement around and onto the pipe (1), wherein the seal ring (55) is manufactured of a flexible synthetic material, in particular a thermoplastic elastomer (TPE) or technical rubber, preferably an olefin-based cross-linked thermoplastic elastomer (TPV), preferably Ethylene Propylene Diene Monomer (EPDM) mixed with polypropylene (PP).

## Patentansprüche

1. Anordnung eines Kunststoffzylinderrohrs (1) und einer Rohrkopplung (210) zur Verbindung mit dem Kunststoffrohr (1), wobei die Rohrkopplung (210) einen Einführteil (12) mit einer Einführöffnung (13) zum Einführen des Kunststoffrohrs (2) in einer Einführrichtung (A) in die Rohrkopplung (210) aufweist, wobei der Einführteil (12) ein Kunststoffgehäuse (11) aufweist, das mit einer Umfangseinführwand (15) versehen ist, in die das Rohr (1) passt, wobei über eine Stufe (17) mit erstem Durchmesser die Einführwand (15) in eine erste Umfangsunterbringungswand (18) mit einem größeren Innendurchmesser (D2) als die Einführwand (15) übergeht, wobei die erste Unterbringungswand (18) einen ersten Falz (20) begrenzt, wobei der Einführteil (12) einen Greifring (30) aufweist, der in dem ersten Falz (20) untergebracht ist und der um das eingeführte Rohr (1) herum in Eingriff steht und der in der Einführrichtung (A) in dem ersten Falz (20) zwischen einer ersten Position, in der das Rohr (1) durch den Greifring (30) in Richtung der Einführwand (15) eingeführt werden kann, und einer zweiten Position, die näher in Richtung der Einführöffnung (13) ist, bewegt werden kann, in der der Greifring fest um und auf das eingeführte Rohr (1) in Eingriff steht, wobei die erste Unterbringungswand (18) in eine Umfangsbegrenzungswand (25) mit einem Innendurchmesser übergeht, der in Richtung der Einführöffnung (13) abnimmt, wobei der Einführteil (12) eine Umfangsdichtung (250) innerhalb der Begrenzungswand (25) aufweist, wobei die Dichtung (250) um und auf das Rohr (1) in Eingriff steht, wobei der Einführteil (12) mit einem Klemmring (240) versehen ist, der sich um den Greifring (30) herum erstreckt, wobei der Klemmring (240) mit einer Innenoberfläche (42) versehen ist, die in Richtung des Greifrings (30) orientiert und zu der Einführrichtung (A) schräg orientiert ist, wobei nach Bewegung aus der ersten Position in die zweite Position die Innenoberfläche (42) den Greifring (30) in eine fixierte Ineingriffnahme auf das Rohr (1) treibt, **dadurch gekennzeichnet, dass** der Klemmring (240) und die Dichtung (250) miteinander verbunden sind oder eine Einheit bilden, wobei der Klemmring (240) und die Dichtung (250) ein separates Einführstück (300) bilden, das in dem Gehäuse (11) platziert ist.

2. Anordnung gemäß Anspruch 1, bei der das Einführstück (300) über Zweikomponenten-Spritzgießen gefertigt ist.

3. Anordnung gemäß einem der vorherigen Ansprüche, bei der auf der Seite der ersten Unterbringungswand (18) die Innenoberfläche (42) des Klemmrings (240) eine direkte Fortführung des ersten Falzes (20) bildet.

4. Anordnung gemäß einem der vorherigen Ansprüche, bei der der Greifring (30) und der Klemmring (240) Teile (34, 44), die aufeinander in Eingriff stehen, zum Begrenzen einer Rotation des Greifrings (30) relativ zu dem Klemmring (240) aufweisen, wobei die Teile (34, 44), die aufeinander in Eingriff stehen, vorzugsweise die Rotation des Greifrings (30) relativ zu dem Klemmring (240) bis zu einem vorbestimmten Hub begrenzen.

5. Anordnung gemäß Anspruch 4, bei der die Teile (34, 44), die aufeinander in Eingriff stehen, einen Einschnapp-Brechring bilden.

6. Anordnung gemäß einem der vorherigen Ansprüche, bei der der Klemmring (240) aus einem thermoplastischen Kunststoffmaterial gefertigt ist, vorzugsweise Polyethylen (PE), Polypropylen (PP) oder Polyvinylchlorid (PVC), oder einem thermoplastischen Biokunststoff, vorzugsweise Polymilchsäure (PLA).

7. Anordnung gemäß einem der vorherigen Ansprüche, bei der der Greifring (30) mit einem Basisring (31) und Greiffingern (34) versehen ist, die von demselben vorstehen, wobei die Finger (34) um den Basisring (31) herum verteilt sind und sich von dem Basisring (31) parallel zu der Einführrichtung (A) erstrecken, wobei die Greiffinger (34) vorzugsweise ein freies äußeres Ende aufweisen, das von dem Basisring (31) in Richtung der Einführöffnung (13) orientiert ist.

8. Anordnung gemäß Anspruch 7, bei der die Greiffinger (34) mit einem oder mehr Greifzähnen (36) zur Ineingriffnahme auf das eingeführte Rohr (1) versehen sind.

9. Anordnung gemäß Anspruch 7 oder 8, bei der die Greiffinger (34) mit dem Basisring (31) über ein aktives Gelenk oder eine lokale Verschmälerung in dem Material verbunden sind.

10. Anordnung gemäß einem der Ansprüche 7 bis 9, bei der der Greifring (30) aus einem Kunststoffmaterial gefertigt ist, das härter ist als das Kunststoffmaterial, aus dem das Rohr (1) gefertigt ist.

11. Anordnung gemäß einem der vorherigen Ansprüche, bei der das Rohr (1) aus einem thermoplastischen Kunststoffmaterial gefertigt ist, vorzugsweise Polyethylen (PE), Polypropylen (PP) oder Polyvinylchlorid (PVC), oder einem thermoplastischen Biokunststoff, vorzugsweise Polymilchsäure (PLA).

12. Anordnung gemäß einem der vorherigen Ansprüche, bei der der Greifring (30) aus einem thermoplastischen Kunststoffmaterial gefertigt ist, vorzugsweise Polyoxymethylen (POM), Polysulfon (PSU) oder Polyphenylsulfon (PPSU), wobei das Kunststoffmaterial vorzugsweise mit Glasteilen gemischt ist.

13. Anordnung gemäß einem der vorherigen Ansprüche, bei der das Gehäuse (11) aus einem thermoplastischen Kunststoffmaterial gefertigt ist, vorzugsweise Polyethylen (PE), Polypropylen (PP) oder Polyvinylchlorid (PVC), oder einem thermoplastischen Biokunststoff, vorzugsweise Polymilchsäure (PLA).

14. Anordnung gemäß einem der vorherigen Ansprüche, bei der der Innendurchmesser der Begrenzungswand (35) fließend in Richtung der Einführöffnung (13) abnimmt.

15. Anordnung gemäß einem der vorherigen Ansprüche, bei der die Dichtung (250) mit einem Anbringring (51), mit dem die Dichtung auf die Begrenzungswand in Eingriff steht, und einem Dichtring (55), der mit demselben verbunden ist, zum Abdichten einer Ineingriffnahme um und auf das Rohr (1) versehen ist, wobei der Dichtring (55) aus einem flexiblen Kunststoffmaterial gefertigt ist, insbesondere einem thermoplastischen Elastomer (TPE) oder technischem Gummi, vorzugsweise einem vernetzten thermoplastischen Elastomer auf Olefinbasis (TVP), vorzugsweise Ethylenpropylendienmonomer (EPDM), gemischt mit Polypropylen (PP).

## Revendications

1. Assemblage d'un tuyau cylindrique synthétique (1) et d'un raccord de tuyau (210) pour la connexion au tuyau synthétique (1), dans lequel le raccord de tuyau (210) comprend une partie d'insertion (12) ayant une ouverture d'insertion (13) pour, dans une direction d'insertion (A), insérer le tuyau synthétique (1) dans le raccord de tuyau (210), dans lequel la partie d'insertion (12) comprend un boîtier synthétique (11) qui est prévu avec une paroi d'insertion circonférentielle (15) dans laquelle le tuyau (1) s'adapte, dans lequel via un premier gradin de diamètre (17), la paroi d'insertion (1) se fond dans une première paroi de logement circonférentielle (18) ayant un plus grand diamètre intérieur (D2) que la paroi d'insertion (15), dans lequel la première paroi de logement (18) délimite une première feuillure (20), dans lequel la partie d'insertion (12) comprend une bague de préhension (30) qui est logée dans la première feuillure (20) et qui se met en prise autour du tuyau (1) inséré et qui peut être déplacée dans la direction d'insertion (A) dans la première feuillure (20) entre une première position dans laquelle le tuyau (1) peut être inséré dans la bague de préhension (30) vers la paroi d'insertion (15), et une seconde position plus proche vers l'ouverture d'insertion (13) dans laquelle la bague de préhension (30) se met en prise, de manière fixe, autour et sur le tuyau (1) inséré, dans lequel la première paroi de logement (18) se fond dans une paroi de confinement circonférentielle (25) ayant un diamètre intérieur qui diminue vers l'ouverture d'insertion (13), dans lequel la partie d'insertion (12) comprend un joint d'étanchéité circonférentiel (250) à l'intérieur de la paroi de confinement (25), lequel joint d'étanchéité (250) se met en prise autour et sur le tuyau (1), dans lequel la partie d'insertion (12) est prévue avec une bague de pincement (240) s'étendant autour de la bague de préhension (30), dans lequel la bague de pincement (240) est prévue avec une surface interne (42) qui est orientée vers la bague de préhension (30) et orientée de manière oblique par rapport à la direction d'insertion (A), dans lequel suite au déplacement de la première position à la seconde position, la surface interne (42) pousse la bague de préhension (30) en mise en prise fixe sur le tuyau (1), **caractérisé en ce que** la bague de pincement (240) et le joint d'étanchéité (250) sont raccordés entre eux ou forment une unité, dans lequel la bague de pincement (240) et le joint d'étanchéité (250) forment une pièce d'insert (300) séparée qui est placée dans le boîtier (11).

2. Assemblage selon la revendication 1, dans lequel la pièce d'insert (300) est fabriquée via le moulage par injection à deux composants.

3. Assemblage selon l'une quelconque des revendications précédentes, dans lequel du côté de la première paroi de logement (18), la surface interne (42) de la bague de pincement (240) forme une continuité directe de la première feuillure (20).

4. Assemblage selon l'une quelconque des revendications précédentes, dans lequel la bague de préhension (30) et la bague de pincement (240) ont des parties (34, 44) qui se mettent en prise l'une sur l'autre pour limiter une rotation de la bague de préhension (30) par rapport à la bague de pincement (240), dans lequel les parties (34, 44) qui se mettent en prise l'une sur l'autre limitent de préférence la rotation de la bague de préhension (30) par rapport à la bague de pincement (240) jusqu'à une course prédéterminée.

5. Assemblage selon la revendication 4, dans lequel les parties (34, 44) qui se mettent en prise l'une sur l'autre forment une bague de rupture.

6. Assemblage selon l'une quelconque des revendications précédentes, dans lequel la bague de pincement (240) est fabriquée avec un matériau synthétique thermoplastique, de préférence du polyéthylène (PE), du polypropylène (PP) ou du polychlorure de vinyle (PVC) ou un plastique biodégradable thermoplastique, de préférence de l'acide polylactique (PLA).

7. Assemblage selon l'une quelconque des revendications précédentes, dans lequel la bague de préhension (30) est prévue avec une bague de base (31) et des doigts de préhension (34) faisant saillie de cette dernière, lesquels doigts (34) sont répartis autour de la bague de base (31) et s'étendent à partir de la bague de base (31) parallèle à la direction d'insertion (A), dans lequel les doigts de préhension (34) ont de préférence une extrémité externe libre qui est orientée de la bague de base (31) vers l'ouverture d'insertion (13) .

8. Assemblage selon la revendication 7, dans lequel les doigts de préhension (34) sont prévus avec une ou plusieurs dents de préhension (36) pour la mise en prise sur le tuyau (1) inséré.

9. Assemblage selon la revendication 7 ou 8, dans lequel les doigts de préhension (34) sont raccordés à la bague de base (31) via une charnière active ou un rétrécissement local dans le matériau.

10. Assemblage selon l'une quelconque des revendications 7 à 9, dans lequel la bague de préhension (30) est fabriquée avec un matériau synthétique qui est plus dur que le matériau synthétique avec lequel le tuyau (1) est fabriqué.

11. Assemblage selon l'une quelconque des revendications précédentes, dans lequel le tuyau (1) est fabriqué avec un matériau synthétique thermoplastique, de préférence du polyéthylène (PE), du polypropylène (PP) ou du polychlorure de vinyle (PVC) ou un plastique biodégradable thermoplastique, de préférence de l'acide polylactique (PLA).

12. Assemblage selon l'une quelconque des revendications précédentes, dans lequel la bague de préhension (30) est fabriquée avec un matériau synthétique thermoplastique, de préférence du polyoxyméthylène (POM), du polysulfone (PSU) ou du polyphénylsulfone (PPSU), dans lequel le matériau synthétique est de préférence mélangé avec des parties de verre.

13. Assemblage selon l'une quelconque des revendications précédentes, dans lequel le boîtier (11) est fabriqué avec un matériau synthétique thermoplastique, de préférence du polyéthylène (PE), du polypropylène (PP) ou du polychlorure de vinyle (PVC), ou un plastique biodégradable thermoplastique, de préférence de l'acide polylactique (PLA).

14. Assemblage selon l'une quelconque des revendications précédentes, dans lequel le diamètre intérieur de la paroi de confinement (25) diminue de façon continue vers l'ouverture d'insertion (13).

15. Assemblage selon l'une quelconque des revendications précédentes, dans lequel le joint d'étanchéité (250) est prévu avec une bague de fixation (51) avec laquelle le joint d'étanchéité se met en prise sur la paroi de confinement, et une bague d'étanchéité (55) raccordée à ce dernier pour la mise en prise étanche autour et sur le tuyau (1), dans lequel la bague d'étanchéité (55) est fabriquée avec un matériau synthétique flexible, en particulier un élastomère thermoplastique (TPE) ou un caoutchouc technique, de préférence un élastomère thermoplastique réticulé à base d'oléfine (TPV), de préférence un éthylène-propylènediène monomère (EPDM) mélangé avec un polypropylène (PP) .
